# EUROPEAN PATENT SPECIFICATION

(11) **EP 2 692 932 B1**
(45) Date of publication and mention of the grant of the patent: **05.10.2016**
(21) Application number: 13179283.0
(22) Date of filing: 05.08.2013
(51) Int. Cl.: D06F 37/20, D06F 37/30, H02K 1/14, H02K 1/18, H02K 3/32, H02K 3/52

(54) **Washing machine**
Waschmaschine
Machine à laver

(30) Priority: 03.08.2012 KR 20120085146
(43) Date of publication of application: 05.02.2014
(73) Proprietor: Samsung Electronics Co., Ltd, Gyeonggi-do 16677 (KR)
(72) Inventor: Bang, Myung Bae, Gyeonggi-do (KR); In, Byung Ryel, Gyeonggi-do (KR); Hwang, Woong, Gyeongi-do (KR)
(74) Representative: Grey, Ian Michael

(56) References cited:
- EP-A1- 2 202 342
- WO-A1-2010/116486
- US-B2- 6 849 982

## Description

The following description relates to a motor to generate rotational force and a washing machine having the same.

A washing machine is an appliance that washes laundry using electric power. In general, a washing machine includes a tub to store wash water, a drum rotatably mounted in the tub, and a motor to rotate the drum.

A motor includes a stator and a rotor, and generates rotational force using electric energy. The rotor is configured to electromagnetically interact with the stator, and rotates by force exerted by a magnetic field and an electric current flowing through coils.

The stator includes a stator core and an insulator to receive the stator core therein. In general, the stator core has a circular shape, and the insulator has a receiving part corresponding to the circular stator core.

In a manufacturing process of the stator, the stator core is inserted into the insulator.

However, a center of the stator and a center of the insulator may be misaligned with each other, or a diameter of the stator core may be larger than a diameter of the receiving part of the insulator due to machining error occurring in the manufacturing process of the stator core. In this case, a worker may apply more force than necessary to insert the stator core into the insulator, which may cause damage to the insulator made of a weaker material than the stator core or may result in an inability to insert the stator core into the insulator.

It is an aspect of the present disclosure to provide a motor having an improved structure capable of enhancing productivity and assemblability and a washing machine having the same.

Additional aspects of the invention will be set forth in part in the description which follows and, in part, will be obvious from the description, or may be learned by practice of the invention.

It is known from EP2202342A1 to provide a washing machine comprising a tub, a drum rotatably received in the tub, and a motor mounted to rotate the drum, wherein the motor comprises a stator comprising a stator core and an insulator to cover the stator core, and a rotor rotatably disposed either inside or outside the stator.

According to the present invention, there is provided a washing machined characterised in that the insulator comprises at least one support protrusion protruding from an inner circumferential surface of the insulator toward said axis to support an outer circumferential surface of the stator core.

The support protrusion may be provided in two or more separate parts which are arranged spaced from each other along the inner circumferential surface of the insulator.

The insulator may include a first insulator to cover one side of the stator core and a second insulator to cover the other side of the stator core, and the support protrusion may include a first support protrusion provided at an inner circumferential surface of the first insulator and a second support protrusion provided at an inner circumferential surface of the second insulator.

At least a portion of the first support protrusion may be slanted in an insertion direction of the stator core into the first insulator, and at least a portion of the second support protrusion may be slanted in an insertion direction of the stator core into the second insulator.

The first support protrusion may include a first slanted portion and a second slanted portion which have different slanted angles. The first slanted portion may protrude further than the second slanted portion toward a center of the first insulator.

The slanted angle of the second slanted portion may be less than the slanted angle of the first slanted portion. The slanted angle of the second slanted portion may range from approximately 3° to approximately 10°.

At least a portion of the second slanted portion may be in contact with an outer circumferential surface of the stator core when the stator core is in an inserted state in the first insulator.

The stator core may include a core body having a ring shape and a plurality of core teeth extending from an inner circumferential surface of the core body toward a center of the stator core and arranged spaced apart from each other along the inner circumferential surface of the core body, and the insulator may include a first receiving part to receive the core body and a second receiving part to receive the plurality of core teeth.

The support protrusion may be provided at an inner circumferential surface of the first receiving part to support an outer circumferential surface of the core body.

The insulator may include a plurality of fixing ribs protruding toward the rear surface of the tub and arranged spaced apart from each other in a peripheral direction of the insulator, and a plurality of fixing holes formed through the fixing ribs in an axial direction of the stator.

The stator may further include at least one sleeve inserted into the fixing holes, and the insulator may include at least one contact protrusion protruding from an inner circumferential surface of each of the fixing holes toward a center of each of the fixing holes and serving to contact an outer circumferential surface of the sleeve.

The contact protrusion may be provided in two or more separate parts which are arranged spaced from each other along the inner circumferential surface of the fixing holes.

The contact protrusions may be arranged equidistantly from each other.

At least one of the contact protrusions may be disposed inside an imaginary circle whose diameter is a distance between a rotation center of the stator and a center of each of the fixing holes.

An angle between a line connecting a center of the contact protrusion disposed inside the imaginary circle and the center of the fixing hole and a line connecting the rotation center of the stator and the center of the fixing hole may range from approximately 45° to less than approximately 90°.

In accordance with an aspect of the present disclosure, a washing machine includes a main body, a tub disposed in the main body, a drum rotatably disposed in the tub, a motor to rotate the drum, and a fixing member to fix the motor to a rear surface of the tub. The motor includes a stator fixed to the rear surface of the tub, and a rotor rotatably disposed either inside or outside the stator. The stator includes at least one fixing hole through which the fixing member is inserted, a sleeve inserted into the fixing hole, and at least one contact protrusion protruding from an inner circumferential surface of the fixing hole toward a center of the fixing hole and serving to contact an outer circumferential surface of the sleeve.

The stator may include a stator core and an insulator to cover the stator core, the insulator may include a plurality of fixing ribs arranged spaced apart from each other in a peripheral direction of the insulator, and the fixing hole may be formed through each of the fixing ribs in an axial direction of the stator.

The contact protrusion may have a smaller length than the inner circumferential surface of the fixing hole in an axial direction of the fixing hole.

The contact protrusion may include a guide portion configured to contact an end of the sleeve and guide the sleeve to be inserted into an area of the fixing hole provided with the contact protrusion.

The contact protrusion may be provided in two or more separate parts which are arranged equidistantly from each other along the inner circumferential surface of the fixing hole.

At least one of the contact protrusions may be disposed inside an imaginary circle whose diameter is a distance between a rotation center of the stator and a center of the fixing hole, and an angle between a line connecting a center of the contact protrusion disposed inside the imaginary circle and the center of the fixing hole and a tangent line of the imaginary circle passing the center of the fixing hole may be greater than approximately 0° and less than approximately 45°.

The contact protrusion may protrude from a portion of the inner circumferential surface of the fixing hole which is located apart from an entrance of the fixing hole in an axial direction of the fixing hole.

The stator may include a first insulator to cover one side of the stator core and a second insulator to cover the other side of the stator core.

The fixing ribs may include a plurality of first fixing ribs arranged spaced from each other in a peripheral direction of the first insulator, and a plurality of second fixing ribs arranged spaced from each other in a peripheral direction of the second insulator. The fixing holes may include a plurality of first fixing holes formed through the first fixing ribs in an axial direction of the stator, and a plurality of second fixing holes formed through the second fixing ribs in the axial direction of the stator and respectively communicating with the plurality of first fixing holes. The contact protrusion may include at least one first contact protrusion protruding from an inner circumferential surface of each of the first fixing holes toward a center of each of the first fixing holes and serving to contact the outer circumferential surface of the sleeve, and at least one second contact protrusion protruding from an inner circumferential surface of each of the second fixing holes toward a center of each of the second fixing holes and serving to contact the outer circumferential surface of the sleeve.

The first contact protrusion may protrude from a portion of the inner circumferential surface of the first fixing hole which is located apart from an entrance of the first fixing hole in an axial direction of the first fixing hole.

The second contact protrusion may protrude from a portion of the inner circumferential surface of the second fixing hole which is located apart from an entrance of the second fixing hole in an axial direction of the second fixing hole.

In accordance with an aspect of the present disclosure, a motor includes a stator including a stator core and an insulator to cover the stator core, and a rotor rotatably disposed either inside or outside the stator. The insulator includes at least one support protrusion protruding from an inner circumferential surface of the insulator, which opposes an outer circumferential surface of the stator core, toward a center of the stator in order to support the stator core.

As is apparent from the above description, due to the support protrusions provided at the inner circumferential surface of the insulator in order to support the outer circumferential surface of the stator core, the assembly of the stator core and the insulator may be easily achieved, and defective assembly because of machining error of the stator core is prevented, thereby enhancing assemblability and productivity of the motor.

In addition, due to the contact protrusions provided at the inner circumferential surface of the fixing hole configured to fix the stator to the rear surface of the tub in order to contact the outer circumferential surface of the sleeve, the sleeve may be easily inserted into the fixing hole, and defective assembly because of machining error of the sleeve is prevented, thereby enhancing assemblability and productivity of the motor.

These and/or other aspects of the disclosure will become apparent and more readily appreciated from the following description of the embodiments, taken in conjunction with the accompanying drawings in which:
FIG. 1 is a view showing a washing machine according to an embodiment of the present disclosure;
FIG. 2 is an exploded perspective view showing a stator and a rotor of a motor and a tub in the washing machine according to the embodiment of the present disclosure;
FIG. 3 is a perspective view showing the stator of the motor according to the embodiment of the present disclosure;
FIG. 4 is a plan view showing the stator of the motor according to the embodiment of the present disclosure;
FIG. 5 is an exploded perspective view showing the stator depicted in FIG. 3;
FIG. 6 is a plan view showing a second insulator depicted in FIG. 5;
FIG. 7 is a plan view showing engagement of the second insulator with a stator core;
FIG. 8 is an enlarged view of portion "A" in FIG. 7;
FIG. 9 is a sectional view taken along line I - I in FIG. 6;
FIG. 10 is a view showing a process of engaging the stator core with the second insulator in FIG. 9;
FIG. 11 is an enlarged view of portion "B" in FIG. 4; and
FIG. 12 is a sectional view taken along line n - n in FIG. 11.

Reference will now be made in detail to the embodiments of the present disclosure, examples of which are illustrated in the accompanying drawings, wherein like reference numerals refer to like elements throughout. A motor according to the embodiments of the present disclosure may be used for various apparatuses using a motor as a power source, such as a washing machine, an air conditioner, an electric car, a light rail transit system, an electric bicycle, a small-sized electric generator or the like, and a washing machine will be explained for a better understanding of the present disclosure.

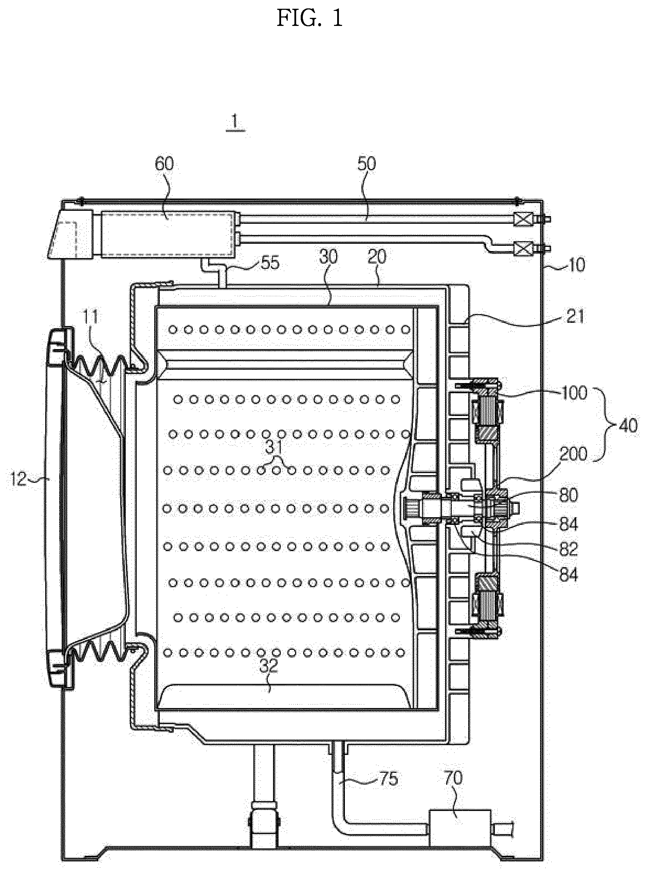

FIG. 1 is a view showing a washing machine according to an embodiment of the present disclosure.

As shown in FIG. 1, a washing machine 1 includes a cabinet 10 defining an appearance thereof, a tub 20 disposed in the cabinet 10, a drum 30 rotatably disposed in the tub 20, and a motor 40 to rotate the drum 30.

The cabinet 10 is formed with a laundry entrance hole 11 at a front portion thereof, through which a user places laundry into the drum 30. A door 12 is provided at the front portion of the cabinet 10 in order to open and close the laundry entrance hole 11.

However, the disclosure is not limited to the above embodiment. For example, the door may be provided on a top portion of the cabinet 10.

A water supply pipe 50, through which wash water is supplied to the tub 20, is mounted above the tub 20. One end of the water supply pipe 50 is connected to an external water supply source (not shown), and the other end of the water supply pipe 50 is connected to a detergent supply device 60. The detergent supply device 60 is connected to the tub 20 by a connecting pipe 55. The water supplied through the water supply pipe 50 flows into the tub 20 together with a detergent via the detergent supply device 60.

A drain pump 70 and a drain pipe 75 are mounted below the tub 20, in order to discharge the water in the tub 20 from the cabinet 10.

The drum 30 is formed with a plurality of through-holes 31 for wash water flow on a peripheral surface thereof. The drum 30 is also provided with a plurality of lifters 32 on an inner circumferential surface thereof, in order to lift laundry when the drum 30 is rotated.

The drum 30 and the motor 40 are connected to each other by a driving shaft 80. The driving shaft 80 transmits rotational force of the motor 40 to the drum 30. One end of the driving shaft 80 is connected to the drum 30, and the other end of the driving shaft 80 extends outwardly from a rear wall 21 of the tub 20.

A bearing housing 82 is mounted to the rear wall 21 of the tub 20, in order to rotatably support the driving shaft 80. The bearing housing 82 may be made of aluminum alloy, and may be inserted into the rear wall 21 of the tub 20 in an injection molding process of the tub 20. Bearings 84 are disposed between the bearing housing 82 and the driving shaft 80 so that the driving shaft 80 may smoothly rotate. However, the disclosure is not limited to the above embodiment. For example, the washing machine may comprise a top loading type washing machine where the above components are arranged to provide a top loading arrangement.

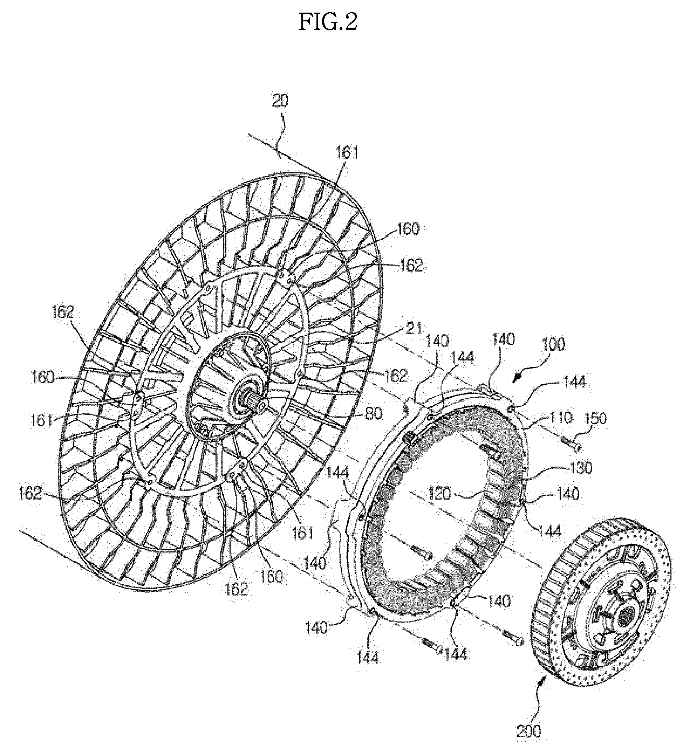

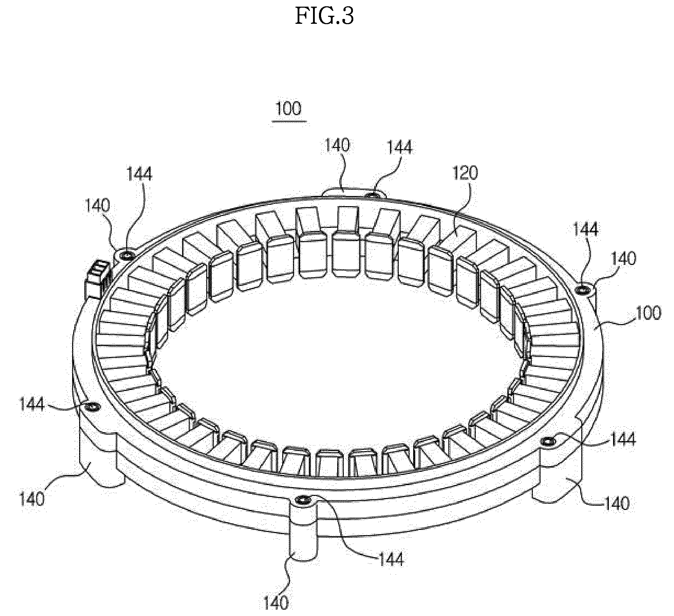

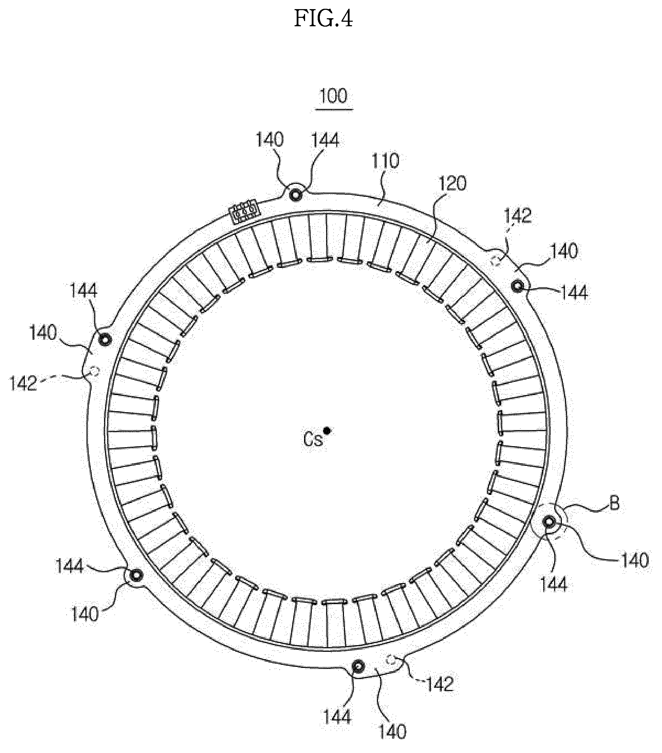

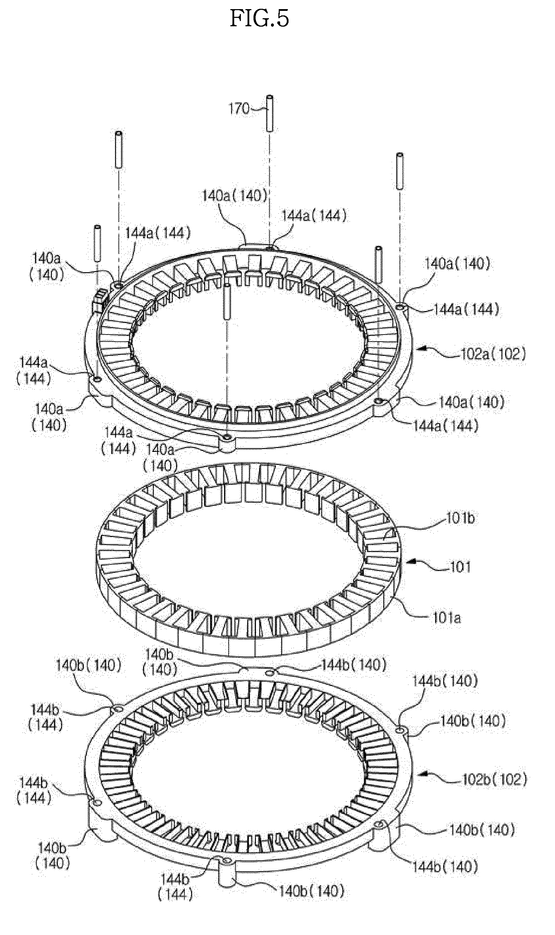

FIG. 2 is an exploded perspective view showing a stator and a rotor of the motor and the tub in the washing machine according to the embodiment of the present disclosure, FIG. 3 is a perspective view showing the stator of the motor according to the embodiment of the present disclosure, FIG. 4 is a plan view showing the stator of the motor according to the embodiment of the present disclosure, and FIG. 5 is an exploded perspective view showing the stator depicted in FIG. 3. Illustration of a coil is omitted in FIGS. 3 and 5. The motor according to the embodiment of the present disclosure includes both an inner rotor type motor, in which a rotor is disposed inside a stator, and an outer rotor type motor, in which a rotor is disposed outside a stator.

Hereinafter, an inner rotor type motor will be explained for a better understanding of the present disclosure.

As shown in FIGS. 2 through 5, the motor 40 is coupled outside the tub 20, and supplies power to the drum 30 to rotate the same in both directions. The motor 40 includes a stator 100 mounted to the rear wall 21 of the tub 20, and a rotor 200 disposed inside the stator 100 and configured to rotate by electromagnetic interaction with the stator 100.

The stator 100 is formed by engagement of a stator core 101 made of a metallic material and an insulator 102 covering the stator core 101. The stator 100 includes a circular stator body 110, a plurality of stator teeth 120 arranged in a peripheral direction of the stator body 110, coils 130 wound around the plurality of stator teeth 120, a plurality of fixing ribs 140 to fix the stator 100 to the rear wall 21 of the tub 20, a plurality of fixing pins 142, and a plurality of fixing holes 144.

The stator body 110 supports the plurality of stator teeth 120. The plurality of stator teeth 120 radially protrude from an inner circumferential surface of the stator body 110 toward a center of the stator body 110, and are arranged spaced apart from each other in a peripheral direction of the stator body 110.

The fixing ribs 140 protrude from one side surface of the stator body 110, which opposes the rear wall 21 of the tub 20, toward the rear wall 21 of the tub 20, and are arranged spaced apart from each other in a peripheral direction of the stator body 110.

The fixing pins 142 protrude from one surface of the fixing ribs 140, which opposes the rear wall 21 of the tub 20, toward the rear wall 21 of the tub 20. The fixing pins 142 serve to be inserted into the rear wall 21 of the tub 20 in order to set the position of the stator 100 before fixing the stator 100 to the rear wall 21 of the tub 20.

The fixing holes 144 are formed through the stator body 110 and the fixing ribs 140. Sleeves 170 are inserted into the fixing holes 144 in order to reinforce engagement between the stator 100 and the tub 20. Fixing members 150, such as bolts, for example, are coupled to the rear wall 21 of the tub 20 through the sleeves 170.

The fixing ribs 140, the fixing pins 142, and the fixing holes 144 may be formed integrally with the insulator 102 in an injection molding process of a first insulator 102a and a second insulator 102b.

The rear wall 21 of the tub 20, to which the stator 100 is coupled, is provided with support ribs 160 configured to be in contact with the fixing ribs 140 to support the stator 100 after the stator 100 is coupled to the rear wall 21 of the tub 20, first receiving holes 161 formed at the support ribs 160, into which the fixing pins 142 are inserted, and second receiving holes 162 formed at the support ribs 160, into which the fixing members 150 are inserted.

The support ribs 160 protrude rearward from the rear wall 21 of the tub 20, and are positioned corresponding to the fixing ribs 140 so as to be kept in contact with the fixing ribs 140 in a state of coupling the stator 100 to the rear wall 21 of the tub 20.

The first receiving holes 161 receive the fixing pins 142 therein so that the position of the stator 100 may be set before the stator 100 is fixed to the rear wall 21 of the tub 20.

The second receiving holes 162 receive the fixing members 150, such as bolts, therein so that the stator 100 may be fixed to the rear wall 21 of the tub 20.

The first receiving holes 161 and the second receiving holes 162 may be formed integrally with the tub 20 in an injection molding process of the tub 20.

Hereinafter, engagement between the stator core 101 and the insulator 102 will be explained.

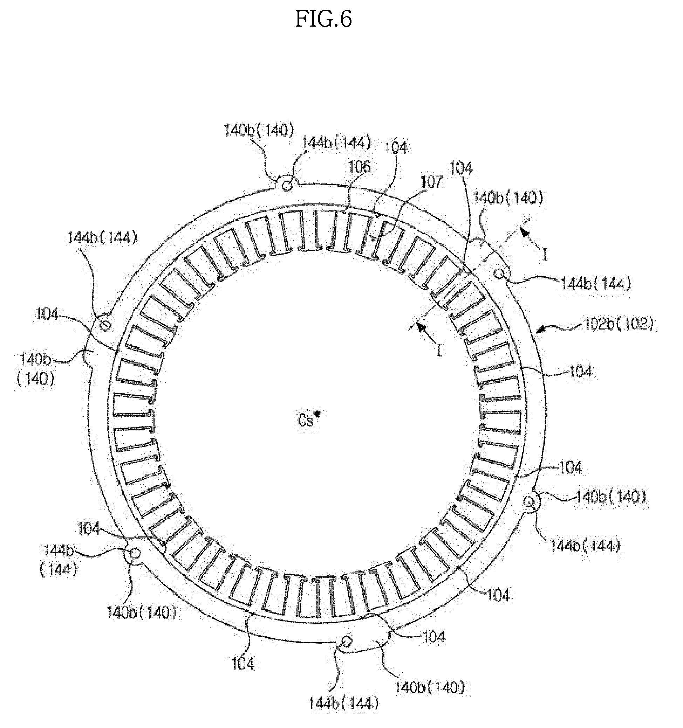

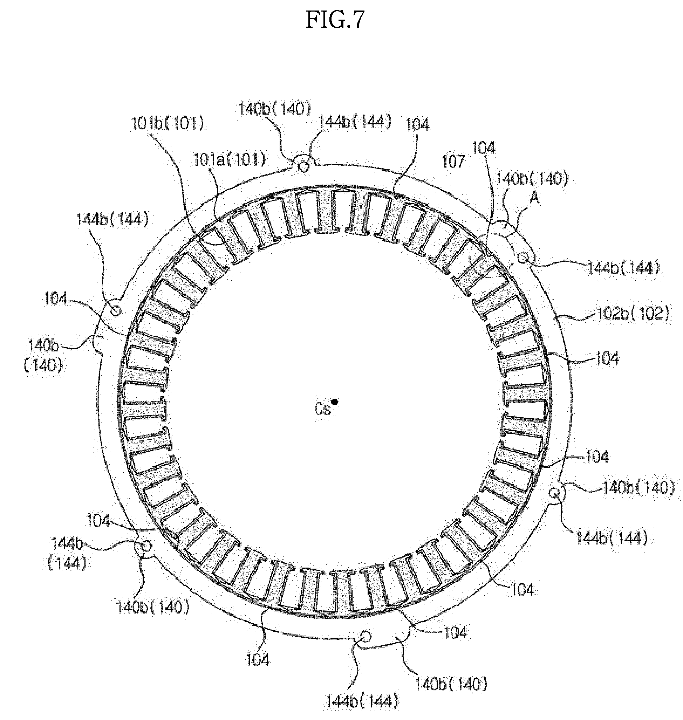

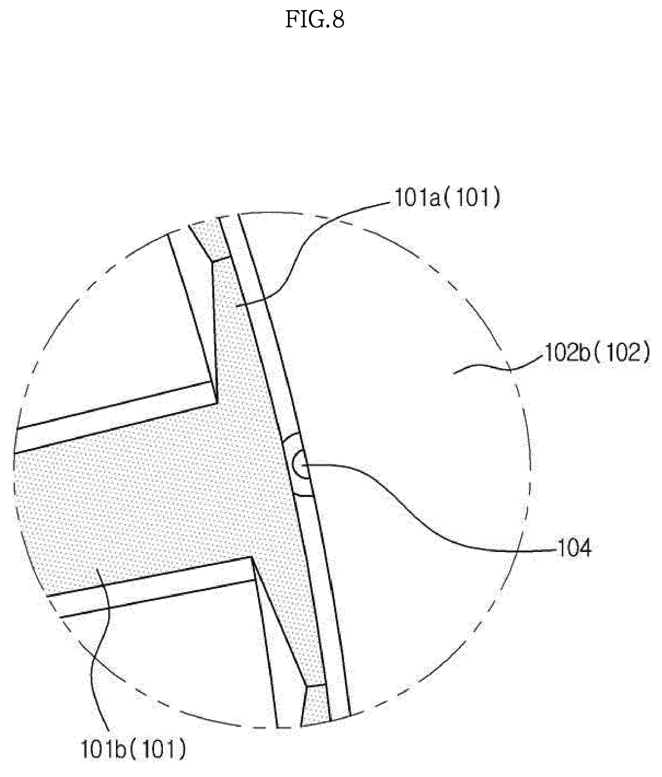

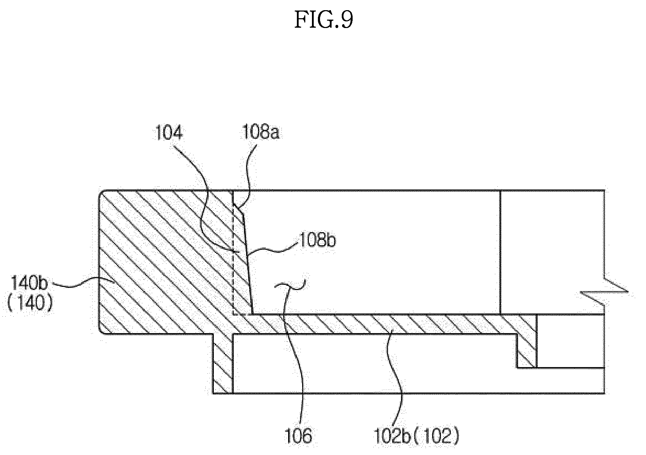

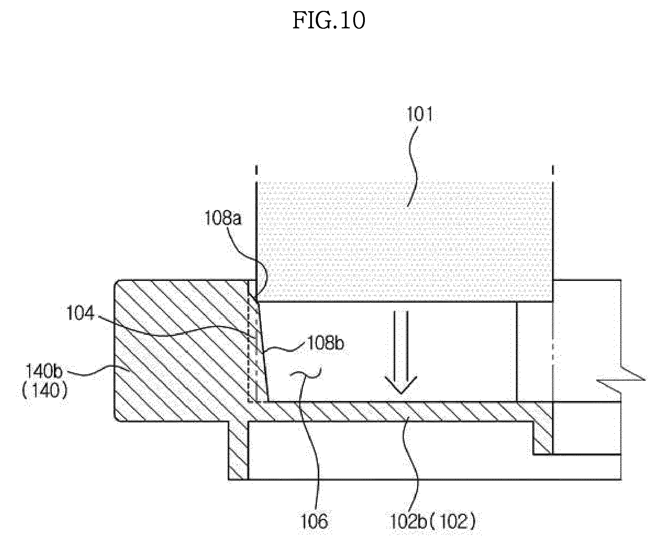

FIG. 6 is a plan view showing the second insulator depicted in FIG. 5, FIG. 7 is a plan view showing the engagement between the stator core and the second insulator, FIG. 8 is an enlarged view of portion "A" in FIG. 7, FIG. 9 is a sectional view taken along line I - I in FIG. 6, and FIG. 10 is a view showing a process of engaging the stator core with the second insulator in FIG. 9.

As shown in FIGS. 2 through 10, the stator core 101 includes a ring-shaped core body 101a, and a plurality of core teeth 101b radially extending from an inner circumferential surface of the core body 101a toward a center of the core body 101a and arranged spaced apart from each other along the inner circumferential surface of the core body 101a. The first insulator 102a and the second insulator 102b cover both sides of the stator core 101. The stator core 101 may be formed by laminating pressed steel plates, and the first and second insulators 102a and 102b may be made of a material having electrical insulation.

The first insulator 102a and the second insulator 102b are provided with at least one first support protrusion (not shown) and at least one second support protrusion 104, respectively, in order to support the outer circumferential surface of the stator core 101.

Because a structure of the first insulator 102a to receive one side of the stator core 101 and a structure of the second insulator 102b to receive the other side of the stator core 101 are identical, the structure of the second insulator 102b to receive the stator core 101 will be focused upon to avoid repetition.

The second insulator 102b includes a first receiving part 106 to receive the core body 101a, and a second receiving part 107 to receive the plurality of core teeth 101b. The first receiving part 106 has a ring shape corresponding to the core body 101a to receive the core body 101a. The second receiving part 107 is connected to an inner side of the first receiving part 106, and has a shape corresponding to the core teeth 101b to receive the respective core teeth 101b.

The inner circumferential surface of the second insulator 102b, which opposes the outer circumferential surface of the core body 101a, is provided with a plurality of second support protrusions 104 which contact the outer circumferential surface of the core body 101a to support the same. The second support protrusions 104 protrude from the inner circumferential surface of the second insulator 102b toward a center of the stator 100.

Each of the second support protrusions 104 includes a first slanted portion 108a and a second slanted portion 108b which have different slanted angles from each other.

The first slanted portion 108a is formed at an upper portion of the second support protrusion 104 so as to temporarily support the stator core 101 before the stator core 101 is inserted into the second insulator 102b. Because the slanted angle of the first slanted portion 108a is larger than the slanted angle of the second slanted portion 108b, the stator core 101 may be seated on the upper portion of the second insulator 102b before the stator core 101 is inserted into the second insulator 102b.

The second slanted portion 108b is formed below the first slanted portion 108a, and serves to guide the stator core 101 to be inserted into the second insulator 102b. In addition, when the stator core 101 is in a completely inserted state in the second insulator 102b, at least a portion of the second slanted portion 108b contacts the outer circumferential surface of the stator core 101 and supports the same so that the stator core 101 may be firmly fixed to the second insulator 102b. To guide the stator core 101 to be inserted into the second insulator 102b and support the stator core 101 by contacting the outer circumferential surface of the same, the second slanted portion 108b may have a slanted angle ranging from approximately 3° to approximately 10°.

The plurality of second support protrusions 104 are arranged spaced apart from each other along the inner circumferential surface of the second insulator 102b in a peripheral direction. Accordingly, although a center of the stator core 101 is slightly misaligned with a center of the second insulator 102b when the stator core 101 is seated on the first slanted portion 108a in an initial process of assembly, a relative position between the stator core 101 and the second insulator 102b is corrected so that the center of the stator core 101 and the center of the second insulator 102b are aligned with each other in the process of inserting the stator core 101 into the second insulator 102b.

The support protrusions 104 decrease a contact area between the stator core 101 and the second insulator 102b so that the stator core 101 may be easily inserted into the second insulator 102b. In addition, although an actual diameter of the stator core 101 is slightly larger than a designed diameter due to a machining error, for example, the machining error is compensated for by a process in which the second support protrusions 104 contact the outer circumferential surface of the stator core 101 and are deformed when the stator core 101 is inserted into the second insulator 102b, which prevents the stator core 101 from not being inserted into the second insulator 102b.

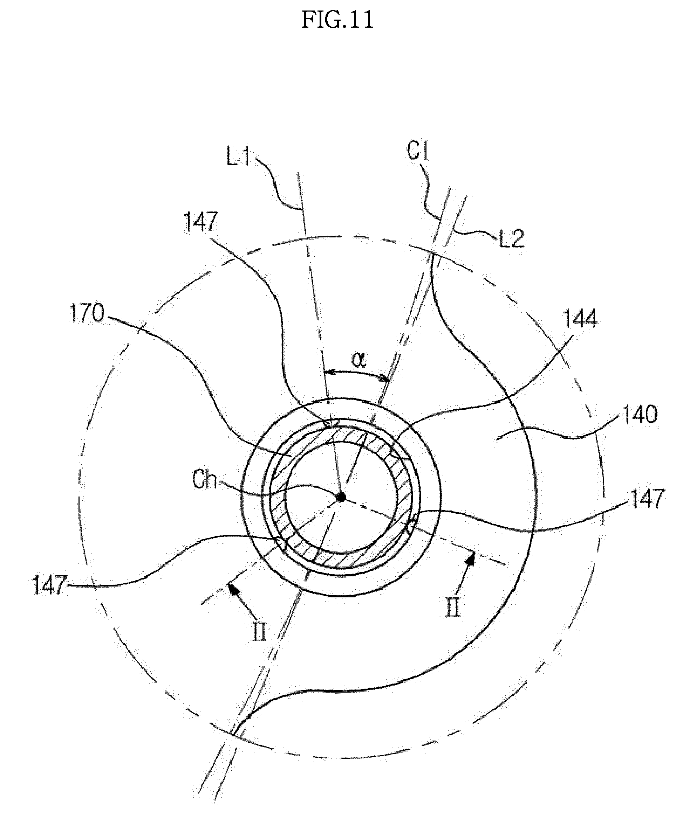

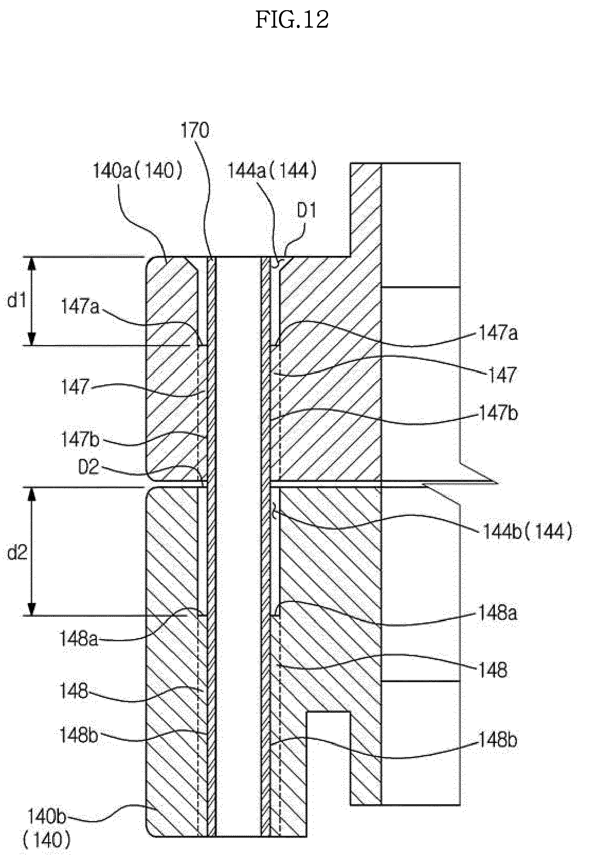

Hereinafter, engagement between the stator 100 and the sleeves 170 will be explained. FIG. 11 is an enlarged view of a B portion in FIG. 4, and FIG. 12 is a sectional view taken along line n - n in FIG. 11.

As shown in FIGS. 2 through 5, 11, and 12, the first insulator 102a and the second insulator 102b include a plurality of first fixing ribs 140a and a plurality of second fixing ribs 140b, respectively, which compose the plurality of fixing ribs 140 when the first insulator 102a and the second insulator 102b are in a coupled state with the stator core 101. The first insulator 102a and the second insulator 102b further include a plurality of first fixing holes 144a and a plurality of second fixing holes 144b, respectively, which compose the plurality of fixing holes 144 by communicating with each other when the first insulator 102a and the second insulator 102b are in a coupled state with the stator core 101.

Each of the first fixing holes 144a is provided with at least one first contact protrusion 147 which protrudes from an inner circumferential surface of the first fixing hole 144a toward a center of the first fixing hole 144a and contacts an outer circumferential surface of the sleeve 170. Each of the second fixing holes 144b is provided with at least one second contact protrusion 148 which protrudes from an inner circumferential surface of the second fixing hole 144b toward a center of the second fixing hole 144b and contacts the outer circumferential surface of the sleeve 170.

The first contact protrusion 147 includes a first guide portion 147a which is configured to contact an end of the sleeve 170 and guide the sleeve 170 to be inserted into an area of the first fixing hole 144a provided with the first contact protrusion 147, and a first contact portion 147b which is configured to be kept in contact with the outer circumferential surface of the sleeve 170 inserted into the first fixing hole 144a and support the sleeve 170.

As shown in FIG. 12, the first contact protrusion 147 protrudes from a portion of the inner circumferential surface of the first fixing hole 144a which is located apart from an entrance D1 of the first fixing hole 144a in an axial direction of the first fixing hole 144a.

That is, the first guide portion 147a is not located at the entrance D1 of the first fixing hole 144a, but is located on the inner circumferential surface of the first fixing hole 144a which is spaced apart from the entrance D1 of the first fixing hole 144a by a certain distance d1. The reason that the first contact protrusion 147 is located apart from the entrance D1 of the first fixing hole 144a in an axial direction of the first fixing hole 144a is that an end of the sleeve 170 may be supported by a portion of the inner circumferential surface of the first fixing hole 144a without the first contact protrusion 147 while the end of the sleeve 170 is in contact with the first guide portion 147a before the sleeve 170 is inserted into the first fixing hole 144a.

The first contact protrusion 147 may be provided in two or more separate parts which are arranged equidistantly from each other along the inner circumferential surface of the first fixing hole 144a. The plurality of first contact protrusions 147 are arranged spaced from each other so that force exerted on the first fixing hole 144a is not concentrated at a specific point but is evenly dispersed while the stator 100 is fixed to the rear wall 21 of the tub 20.

For instance, as shown in FIG. 11, if three first contact protrusions 147 are provided at the inner circumferential surface of the first fixing hole 144a, an imaginary circle C1, whose diameter is a distance between a rotation center Cs of the stator 100 and a center Ch of the first fixing hole 144a, may be formed. On the basis of the imaginary circle C1, an angle α between a line L1, which connects a center Ch of two first contact protrusions 147 disposed inside the imaginary circle C1 and the center Ch of the first fixing hole 144a, and a tangent line L2 of the imaginary circle C1, which passes the center Ch of the first fixing hole 144a, is greater than approximately 0° and less than approximately 45°. Because a thickness of the first insulator 102a around the first fixing hole 144a in a peripheral direction of the first insulator 102a is larger than a thickness of the first insulator 102a around the first fixing hole 144a in a radial direction of the first insulator 102a, the plurality of first contact protrusions 147 are arranged so that force exerted on the first fixing hole 144a is directed toward a periphery of the first insulator 102a around the first fixing hole 144a.

Similar to the first contact protrusion 147, the second contact protrusion 148 includes a second guide portion 148a which is configured to contact an end of the sleeve 170 and guide the sleeve 170 to be inserted into an area of the second fixing hole 144b provided with the second contact protrusion 148, and a second contact portion 148b which is configured to be kept in contact with the outer circumferential surface of the sleeve 170 inserted into the second fixing hole 144b and support the sleeve 170.

The second contact protrusion 148 protrudes from a portion of the inner circumferential surface of the second fixing hole 144b which is located apart from an entrance D2 of the second fixing hole 144b in an axial direction of the second fixing hole 144b. That is, the second guide portion 148a is not located at the entrance D2 of the second fixing hole 144b, but is located on the inner circumferential surface of the second fixing hole 144b which is spaced apart from the entrance D2 of the second fixing hole 144b by a certain distance d2. The reason that the second contact protrusion 148 is located apart from the entrance D2 of the second fixing hole 144b in an axial direction of the second fixing hole 144b is that although a center of the first fixing hole 144a and a center of the second fixing hole 144b may be slightly misaligned in the insertion process of the sleeve 170, the sleeve 170 having passed through the first fixing hole 144a may be easily inserted into the second fixing hole 144b.

The second contact protrusion 148 may be provided in two or more separate parts which are arranged equidistantly from each other along the inner circumferential surface of the second fixing hole 144b. The plurality of second contact protrusions 148 are arranged spaced from each other so that force exerted on the second fixing hole 144b is not concentrated at a specific point but is evenly dispersed while the stator 100 is fixed to the rear wall 21 of the tub 20. The arrangement principle of the plurality of second contact protrusions 148 is substantially the same as that of the aforementioned a plurality of first contact protrusions 147, and a detailed description thereof will thus be omitted.

The first contact protrusions 147 and the second contact protrusions 148 decrease a contact area between the first and second fixing holes 144a and 144b and the sleeve 170 so that the sleeve 170 may be easily inserted into the first fixing hole 144a and the second fixing hole 144b. In addition, although an actual diameter of the sleeve 170 may be slightly larger than a designed diameter due to machining error, for example, the machining error is compensated for by a process in which the first contact protrusions 147 and the second contact protrusions 148 contact the outer circumferential surface of the sleeve 170 and are deformed when the sleeve 170 is inserted into the first fixing hole 144a and the second fixing hole 144b, which prevents the sleeve 170 from not being inserted into the first fixing hole 144a and the second fixing hole 144b.

Although a few embodiments of the present disclosure have been shown and described, it would be appreciated by those skilled in the art that changes may be made in these embodiments without departing from the principles of the invention, the scope of which is defined in the claims.

## Claims

1. A washing machine comprising:
a tub (20)
a drum (30) rotatably received in the tub (20); and
a motor (40) mounted to rotate the drum (30),
wherein the motor (40) comprises:
a stator (100) comprising a stator core (101) and an insulator (102) to cover the stator core (101), and
a rotor (200) rotatably disposed either inside or outside the stator (100),
**characterised in that** the insulator (102) comprises at least one support protrusion (104) protruding from an inner circumferential surface of the insulator (102) toward a center of the stator to support an outer circumferential surface of the stator core (101).

2. The washing machine according to claim 1, wherein the support protrusion (104) is provided in two or more separate parts which are arranged spaced from each other along the inner circumferential surface of the insulator (102).

3. The washing machine according to claim 1, wherein the insulator (102) comprises a first insulator (102a) to cover one side of the stator core (101) and a second insulator (102b)to cover the other side of the stator core (101), and
the support protrusion comprises a first support protrusion provided at an inner circumferential surface of the first insulator (102a) and a second support protrusion (104) provided at an inner circumferential surface of the second insulator (102b).

4. The washing machine according to claim 3, wherein at least a portion of the first support protrusion is slanted in an insertion direction of the stator core into the first insulator, and
at least a portion of the second support protrusion is slanted in an insertion direction of the stator core into the second insulator.

5. The washing machine according to claim 3, wherein the first support protrusion comprises a first slanted portion and a second slanted portion which have different slanted angles.

6. The washing machine according to claim 5, wherein the first slanted portion (108a) protrudes further than the second slanted portion (108b) toward a center of the first insulator.

7. The washing machine according to claim 5, wherein the slanted angle of the second slanted portion (108b) is less than the slanted angle of the first slanted portion (108a).

8. The washing machine according to claim 7, wherein the slanted angle of the second slanted portion (108b) ranges from approximately 3° to approximately 10°.

9. The washing machine according to claim 5, wherein at least a portion of the second slanted portion (108b) is in contact with an outer circumferential surface of the stator core (101) when the stator core (101) is in an inserted state in the first insulator (102a).

10. The washing machine according to any one of the preceding claims, wherein the stator core (101) comprises a core body (101a) having a ring shape and a plurality of core teeth (101b) extending from an inner circumferential surface of the core body (101a) toward a center of the stator core (101) and arranged spaced apart from each other along the inner circumferential surface of the core body (101a), and
the insulator (102) comprises a first receiving part (106) to receive the core body (101a) and a second receiving part (107) to receive the plurality of core teeth (101b).

11. The washing machine according to claim 10, wherein the support protrusion (104) is provided at an inner circumferential surface of the first receiving part (106) to support an outer circumferential surface of the core body (101a).

12. The washing machine according to claim 1, wherein the insulator (102) comprises a plurality of fixing ribs (140) protruding toward the surface of the tub and arranged spaced apart from each other in a peripheral direction of the insulator (102), and a plurality of fixing holes (144a) formed through the fixing ribs (140) in an axial direction of the stator (100).

13. The washing machine according to claim 12, wherein the stator (100) further comprises at least one sleeve (170) inserted into the fixing holes (144a), and
the insulator (102) comprises at least one contact protrusion (147) protruding from an inner circumferential surface of each of the fixing holes (144a) toward a center of each of the fixing holes (144a) and serving to contact an outer circumferential surface of the sleeve (170).

14. The washing machine according to claim 13, wherein the contact protrusion (147) is provided in two or more separate parts which are arranged spaced from each other along the inner circumferential surface of the fixing holes (144a).

15. The washing machine according to claim 14, wherein at least one of the contact protrusions (147) is disposed inside an imaginary circle whose diameter is a distance between a rotation center of the stator (100) and a center of each of the fixing holes (144a).

## Patentansprüche

1. Waschmaschine, die Folgendes umfasst:
einen Laugenbehälter (20);
eine Trommel (30), die drehbar in dem Laugenbehälter (20) aufgenommen wird; und
einen Motor (40), der dafür angebracht ist, die Trommel (30) zu drehen,
wobei der Motor (40) Folgendes umfasst:
einen Stator (100), der einen Statorkern (101) und einen Isolator (102) umfasst, der den Statorkern (101) abdeckt, und
einen Rotor (200), der drehbar entweder innerhalb oder außerhalb des Stators (100) angeordnet ist, **dadurch gekennzeichnet, dass** der Isolator (102) mindestens einen Stützvorsprung (104) umfasst, der von einer inneren Umfangsfläche des Isolators (102) in Richtung einer Mitte des Stators hervorsteht, um eine äußere Umfangsfläche des Statorkerns (101) zu stützen.

2. Waschmaschine nach Anspruch 1, wobei der Stützvorsprung (104) in zwei oder mehr separaten Teilen vorgesehen ist, die voneinander beabstandet entlang der inneren Umfangsfläche des Isolators (102) angeordnet sind.

3. Waschmaschine nach Anspruch 1, wobei der Isolator (102) Folgendes umfasst: einen ersten Isolator (102a), um eine Seite des Statorkerns (101) abzudecken, und einen zweiten Isolator (102b), um die andere Seite des Statorkerns (101) abzudecken, und
wobei der Stützvorsprung Folgendes umfasst: einen ersten Stützvorsprung, der an einer inneren Umfangsfläche des ersten Isolators (102a) bereitgestellt ist, und einen zweiten Stützvorsprung (104), der an einer inneren Umfangsfläche des zweiten Isolators (102b) bereitgestellt ist.

4. Waschmaschine nach Anspruch 3, wobei mindestens ein Abschnitt des ersten Stützvorsprungs in einer Einführungsrichtung des Statorkerns in den ersten Isolator geneigt ist, und
mindestens ein Abschnitt des zweiten Stützvorsprungs in einer Einführungsrichtung des Statorkerns in den zweiten Isolator geneigt ist.

5. Waschmaschine nach Anspruch 3, wobei der erste Stützvorsprung einen ersten geneigten Abschnitt und einen zweiten geneigten Abschnitt umfasst, die unterschiedliche Neigungswinkel aufweisen.

6. Waschmaschine nach Anspruch 5, wobei der erste geneigte Abschnitt (108a) weiter als der zweite geneigte Abschnitt (108b) in Richtung einer Mitte des ersten Isolators hervorsteht.

7. Waschmaschine nach Anspruch 5, wobei der Neigungswinkel des zweiten geneigten Abschnitts (108b) kleiner ist als der Neigungswinkel des ersten geneigten Abschnitts (108a).

8. Waschmaschine nach Anspruch 7, wobei der Neigungswinkel des zweiten geneigten Abschnitts (108b) im Bereich von etwa 3° bis etwa 10° liegt.

9. Waschmaschine nach Anspruch 5, wobei mindestens ein Abschnitt des zweiten geneigten Abschnitts (108b) mit einer äußeren Umfangsfläche des Statorkerns (101) in Kontakt ist, wenn sich der Statorkern (101) in einem eingesetzten Zustand in dem ersten Isolator (102a) befindet.

10. Waschmaschine nach einem der vorhergehenden Ansprüche, wobei der Statorkern (101) einen Kernkörper (101a) umfasst, der eine Ringform und eine Vielzahl von Kernzähnen (101b) aufweist, die sich von einer inneren Umfangsfläche des Kernkörpers (101a) in Richtung einer Mitte des Statorkerns (101) erstrecken und voneinander beabstandet entlang der inneren Umfangsfläche des Kernkörpers (101a) angeordnet sind, und
wobei der Isolator (102) Folgendes umfasst: ein erstes Aufnahmeteil (106), um den Kernkörper (101a) aufzunehmen und ein zweites Aufnahmeteil (107), um die Vielzahl von Kernzähnen (101b) aufzunehmen.

11. Waschmaschine nach Anspruch 10, wobei der Stützvorsprung (104) an einer inneren Umfangsfläche des ersten Aufnahmeteils (106) bereitgestellt ist, um eine äußere Umfangsfläche des Kernkörpers (101a) zu stützen.

12. Waschmaschine nach Anspruch 1, wobei der Isolator (102) Folgendes umfasst: eine Vielzahl von Befestigungsrippen (140), die in Richtung der Oberfläche des Laugenbehälters hervorstehen und voneinander beabstandet in einer Umfangsrichtung des Isolators (102) angeordnet sind, und eine Vielzahl von Befestigungslöchern (144a), die durch die Befestigungsrippen (140) in einer axialen Richtung des Stators (100) gebildet sind.

13. Waschmaschine nach Anspruch 12, wobei der Stator (100) ferner mindestens eine Hülse (170) umfasst, die in die Befestigungslöcher (144a) eingeführt ist, und
der Isolator (102) mindestens einen Kontaktvorsprung (147) umfasst, der von einer inneren Umfangsfläche jedes der Befestigungslöcher (144a) in Richtung einer Mitte jedes der Befestigungslöcher (144a) hervorsteht und dazu dient, eine äußere Umfangsfläche der Hülse (170) zu berühren.

14. Waschmaschine nach Anspruch 13, wobei der Kontaktvorsprung (147) in zwei oder mehr separaten Teilen vorgesehen ist, die voneinander beabstandet entlang der inneren Umfangsfläche der Befestigungslöcher (144a) angeordnet sind.

15. Waschmaschine nach Anspruch 14, wobei mindestens einer der Kontaktvorsprünge (147) innerhalb eines imaginären Kreises angeordnet ist, dessen Durchmesser einem Abstand zwischen einem Drehmittelpunkt des Stators (100) und einem Mittelpunkt jedes der Befestigungslöcher (144a) entspricht.

## Revendications

1. Machine à laver comprenant :
une cuve (20) ;
un tambour (30) reçu de façon rotative dans la cuve (20) ; et
un moteur (40) monté pour faire tourner le tambour (30),
le moteur (40) comprenant :
un stator (100) lequel comprend un noyau de stator (101) et un isolateur (102) pour couvrir le noyau de stator (101), et
un rotor (200) disposé de façon rotative soit à l'intérieur soit à l'extérieur du stator (100),
**caractérisée en ce que** l'isolateur (102) comprend au moins une saillie de support (104) laquelle fait saillie à partir d'une surface circonférentielle interne de l'isolateur (102) vers un centre du stator afin de soutenir une surface circonférentielle externe du noyau de stator (101).

2. Machine à laver selon la revendication 1, la saillie de support (104) étant prévue en deux ou plusieurs parties séparées qui sont agencées en espacement l'une de l'autre le long de la surface circonférentielle interne de l'isolateur (102).

3. Machine à laver selon la revendication 1, l'isolateur (102) comprenant un premier isolateur (102a) pour couvrir un côté du noyau de stator (101) et un deuxième isolateur (102b) pour couvrir l'autre côté du noyau de stator (101), et
la saillie de support comprenant une première saillie de support prévue au niveau d'une surface circonférentielle interne du premier isolateur (102a), et une deuxième saillie de support (104) prévue au niveau d'une surface circonférentielle interne du deuxième isolateur (102b).

4. Machine à laver selon la revendication 3, au moins une portion de la première saillie de support étant inclinée suivant un sens d'insertion du noyau de stator jusque dans le premier isolateur, et
au moins une portion de la deuxième saillie de support étant inclinée suivant un sens d'insertion du noyau de stator jusque dans le deuxième isolateur.

5. Machine à laver selon la revendication 3, la première saillie de support comprenant une première portion inclinée et une deuxième portion inclinée qui ont des angles d'inclinaison différents.

6. Machine à laver selon la revendication 5, la première portion inclinée (108a) faisant saillie plus loin que la deuxième portion inclinée (108b) vers un centre du premier isolateur.

7. Machine à laver selon la revendication 5, l'angle d'inclinaison de la deuxième portion inclinée (108b) étant inférieur à l'angle d'inclinaison de la première portion inclinée (108a).

8. Machine à laver selon la revendication 7, l'angle d'inclinaison de la deuxième portion inclinée (108b) se situant dans une gamme allant de 3° approximativement à 10° approximativement.

9. Machine à laver selon la revendication 5, au moins une portion de la deuxième portion inclinée (108b) étant au contact d'une surface circonférentielle externe du noyau de stator (101) lorsque le noyau de stator (101) se trouve dans un état inséré dans le premier isolateur (102a).

10. Machine à laver selon l'une quelconque des revendications précédentes, le noyau du stator (101) comprenant un corps de noyau (101a) lequel a une forme annulaire et une pluralité de dents de noyau (101b) lesquelles s'étendent à partir d'une surface circonférentielle interne du corps de noyau (101a) vers un centre du noyau de stator (101) et agencées en espacement les unes par rapport aux autres le long de la surface circonférentielle interne du corps de noyau (101a), et
l'isolateur (102) comprenant une première partie réceptrice (106) pour recevoir le corps de noyau (101a) et une deuxième partie réceptrice (107) pour recevoir la pluralité de dents de noyau (101b).

11. Machine à laver selon la revendication 10, la saillie de support (104) étant prévue au niveau d'une surface circonférentielle interne de la première partie réceptrice (106) afin de soutenir une surface circonférentielle externe du corps de noyau (101a).

12. Machine à laver selon la revendication 1, l'isolateur (102) comprenant une pluralité de nervures de fixation (140) lesquelles font saillie vers la surface de la cuve et agencées en espacement les unes par rapport aux autres suivant un sens périphérique de l'isolateur (102), et une pluralité de trous de fixation (144a) formés à travers les nervures de fixation (140) suivant un sens axial du stator (100).

13. Machine à laver selon la revendication 12, le stator (100) comprenant en outre au moins un manchon (170) lequel est inséré dans les trous de fixation (144a), et
l'isolateur (102) comprenant au moins une saillie de contact (147) laquelle fait saillie à partir d'une surface circonférentielle interne de chacun des trous de fixation (144a) vers un centre de chacun des trous de fixation (144a) et sert à entrer au contact d'une surface circonférentielle externe du manchon (170).

14. Machine à laver selon la revendication 13, la saillie de contact (147) étant prévue en deux ou plusieurs parties séparées qui sont agencées en espacement l'une de l'autre le long de la surface circonférentielle interne des trous de fixation (144a).

15. Machine à laver selon la revendication 14, au moins une des saillies de contact (147) étant disposée à l'intérieur d'un cercle imaginaire dont le diamètre est une distance entre un centre de rotation du stator (100) et un centre de chacun des trous de fixation (144a).
